# EUROPÄISCHE PATENTSCHRIFT

(11) **EP 3 049 313 B1**
(45) Veröffentlichungstag und Bekanntmachung des Hinweises auf die Patenterteilung: **25.10.2017**
(21) Anmeldenummer: 14755842.3
(22) Anmeldetag: 28.08.2014
(51) Int. Cl.: B62D 25/20, B62D 35/02, B60R 13/08

(54) **UNTERBODEN-VERKLEIDUNGSTEIL EINER RADACHSE UND BAUGRUPPE MIT EINEM UNTERBODEN-VERKLEIDUNGSTEIL**
UNDERBODY PANELLING PART OF A WHEEL AXLE AND SUBASSEMBLY COMPRISING AN UNDERBODY PANELLING PART
CARÉNAGE DE BAS DE CAISSE D'UN ESSIEU ET ENSEMBLE DOTÉ D'UN CARÉNAGE DE BAS DE CAISSE

(30) Priorität: 24.09.2013 DE 102013219212
(43) Veröffentlichungstag der Anmeldung: 03.08.2016
(73) Patentinhaber: Bayerische Motoren Werke Aktiengesellschaft, 80809 München (DE)
(72) Erfinder: HENNIG, Matthias, 81541 München (DE); KOHLHUBER, Markus, 85301 Schweitenkirchen (DE); KÖNIG, Roland, 82392 Habach (DE); LEICHT, Rasmus, 85386 München (DE); SCHMIDT, Roland, 82131 Stockdorf (DE); SCHOLZ, Hubert, 81543 München (DE); SEETHALER, Ludwig, 85241 Hebertshausen (DE); TESCH, Gregor, 85748 Garching (DE); FAUSER, Markus, 81379 München (DE)
(86) Internationale Anmeldenummer: PCT/EP2014/068262
(87) Internationale Veröffentlichungsnummer: WO 2015/043867

(56) Entgegenhaltungen:
- DE-A1- 10 209 591
- DE-A1-102007 002 331
- DE-A1-102010 018 779
- US-A1- 2010 217 490

## Beschreibung

Die Erfindung betrifft ein Unterboden-Verkleidungsteil einer Radachse im Bereich des Radkastens eines Kraftfahrzeugs und eine Baugruppe mit einem derartigen Unterboden-Verkleidungsteil.

Vor dem Hintergrund der Diskussion um eine Reduktion des CO₂-Ausstoßes bei Kraftfahrzeugen spielen verbrauchssenkende Maßnahmen eine immer größere Rolle. Hierzu zählt auch das Senken des Luftwiderstands des Fahrzeugs. Während beim Karosseriedesign seit Langem nach optimalen Lösungen gesucht wird, ist die Verringerung des Luftwiderstands des Unterbodens des Fahrzeugs noch nicht sehr weit fortgeschritten. Hier bieten sich jedoch große Verbesserungsmöglichkeiten, da der Unterboden immerhin etwa 20 % zum Gesamtluftwiderstand beitragen kann.

Im Bereich der Vorderachse mit den lenkbaren Rädern stellt sich die besondere Herausforderung, eine Unterbodenverkleidung zu schaffen, die der veränderlichen Radstellung Rechnung trägt.

In der DE 10 2010 018 779 A1 ist hierzu allgemein vorgeschlagen, ein Verkleidungsteil in Abhängigkeit von einer Schwenkbewegung eines Lenkerelements bewegbar am Kraftfahrzeug zu halten.

Aufgabe der Erfindung ist es, ein Unterboden-Verkleidungsteil zu schaffen, das einfach im Bereich einer Radachse im Radkasten anzuordnen ist und eine wirksame Verringerung des Luftwiderstands bewirken kann.

Dies wird erfindungsgemäß mit einem Unterboden-Verkleidungsteil einer Radachse im Bereich des Radkastens eines Kraftfahrzeugs erreicht, das einen Grundkörper aufweist, dessen abdeckende Fläche veränderbar ist und der eine Befestigungsstruktur zur festen Verbindung mit der Karosserie und/oder eine Befestigungsstruktur zur festen Verbindung mit einem Querlenker des Fahrzeugs aufweist. Die abdeckende Fläche kann durch einen Radeinschlag verändert werden, sodass das Unterboden-Verkleidungsteil den Lenkbewegungen des gelenkten Rades des Kraftfahrzeugs folgen und somit die Spaltmaße zwischen dem Unterboden-Verkleidungsteil und dem Rad bzw. dem Radträger optimal gering gehalten werden können. Es ist nicht notwendig, das gesamte Unterboden-Verkleidungsteil drehbar oder verschwenkbar anzuordnen. Anstelle dessen wird die Variabilität des Grundkörpers des Unterboden-Verkleidungsteils ausgenutzt, um dessen, von unten gesehen, abdeckende und damit strömungsleitende Fläche reversibel so zu verändern, dass je nach Radstellung der erforderliche Bereich des Unterbodens durch das Unterboden-Verkleidungsteil bedeckt oder freigegeben wird.

Vorzugsweise ist das Unterboden-Verkleidungsteil abschnittsweise sowohl an der Karosserie, insbesondere an einer Innenseite des Radkastens, sowie stellenweise am Querlenker fest fixiert. Zum Beispiel kann ein Rand des Grundkörpers zumindest abschnittsweise fest an der Innenseite des Radkastens verschraubt sein.

Dabei ist es möglich, einen Großteil der Fläche des Unterboden-Verkleidungsteils unverändert zu lassen und nur einen kleinen Abschnitt dazu vorzusehen, sich mit dem Radeinschlag entsprechend zu verändern.

Diese Fixierung kann auch die notwendige Gegenkraft zur reversiblen Veränderung der abdeckenden Fläche des Grundkörpers bieten.

In einer bevorzugten Ausführungsform ist der Grundkörper zur Veränderung der abdeckenden Fläche flexibel und vorzugsweise in einem gewissen Maß elastisch ausgebildet. Es ist denkbar, eine Vorspannung in Richtung des Radträgers aufzubauen.

Beispielsweise kann der Grundkörper wenigstens einen in im Wesentlichen parallele Falten gelegten Abschnitt aufweisen und quer zu den Falten reversibel auseinanderziehbar sein. Der Grundkörperabschnitt lässt sich dabei in Form eines Faltenbalgs mit ziehharmonikaartigen Falten gestalten. Als Material kommt z.B. ein geeigneter Kunststoff oder ein geeignetes beschichtetes Gewebe infrage.

Die Falten sind vorzugsweise so positioniert, dass sie einerseits eine widerstandsarme Umströmung gewährleisten und andererseits dem Grundkörper eine möglichst große Biegesteifigkeit verleihen. Die Falten verlaufen vorzugsweise in einer Längsrichtung des Fahrzeugs. Um die Stabilität zu verbessern, können beispielsweise die Faltkanten durch Längsstäbe verstärkt sein, die eine höhere Steifigkeit aufweisen als das zwischen ihnen gespannte Material.

Eine Veränderung der Fläche lässt sich hier einfach durch eine Querkraft auf den in Falten geltenden Abschnitt des Grundkörpers erreichen, bei der die Falten quer zu ihrer Längsrichtung auseinandergezogen oder zusammengeschoben werden.

In einer bevorzugten Ausführungsform ist im Verkleidungsteil wenigstens ein quer zur Fahrzeuglängsachse verlaufender Quersteg aus einem elastischen Material vorgesehen. Es ist möglich, jeweils einen in Falten gelegten Abschnitt in Fahrzeuglängsrichtung vor und nach dem Quersteg vorzusehen.

Der Quersteg lässt sich so ausbilden, dass er eine Bewegung in sämtliche Raumrichtungen zulässt, um eine Federbewegung des Radträgers in z-Richtung, aus der Achskinematik resultierende Relativbewegungen in x- und y-Richtung sowie die aus der Elastokinematik resultierenden Bewegungen der Achsbauteile auszugleichen.

Entlang einer Längsseite des Grundkörpers ist vorzugsweise wenigstens eine flexible Strebe vorgesehen, die im eingebauten Zustand einem Radträger des Kraftfahrzeugs zugewandt ist. Diese flexible Strebe lässt sich einsetzen, um eine Kraftübertragung und somit eine Auslenkung des Unterboden-Verkleidungsteils durch beispielsweise den Radträger zu erzielen.

Eine besonders gute Anpassung kann erreicht werden, wenn die flexible Strebe an einem Ende zusammenlaufende flexible Längsstege und mehrere parallel verlaufende flexible Querstege aufweist, die sich quer zu den Längsstegen zwischen diesen erstrecken. Anders gesagt, es ist vorteilhaft, wenn die flexible Strebe so aufgebaut ist, dass sie den sogenannten Flossenstrahleffekt ausnutzen kann. Bei diesem kommt es durch die Verbindung zweier elastischer äußerer Stege mit mehreren parallel verlaufenden, in Längsrichtung des Bauteils kürzer werden flexiblen Querstegen zu dem Effekt, dass bei einer Krafteinwirkung im Bereich des Endes, an dem die Längsstege weiter beabstandet sind, sich das Ende, an dem die Längsstege aufeinander zulaufen, sich in Richtung der Krafteinwirkung und nicht von dieser weg krümmt.

Vorzugsweise werden entlang der Längsseite des Grundkörpers flexible Streben mit zusammenlaufenden Enden vorgesehen, wobei die Enden voneinander weg gerichtet sind, bzw. eine durchgehende flexible Strebe mit zwei entgegengesetzten zusammenlaufenden Enden. Auf diese Weise lässt sich der Flossenstrahleffekt ausnutzen, um bei einer Kraftübertragung auf einen Bereich in der Mitte des Unterboden-Verkleidungsteils durch eine Lenkbewegung ein Ausschwenken des vorderen bzw. hinteren Randes des Grundkörpers in Richtung des Rades hervorzurufen, um die entstehenden Spalte zu schließen.

Optional liegt der Quersteg zwischen zwei flexiblen Streben, sodass durch die Befestigung am Querlenker eine gute Kraftübermittlung auf die flexiblen Streben möglich ist.

Die Erfindung betrifft darüber hinaus eine Baugruppe mit einem erfindungsgemäßen Unterboden-Verkleidungsteil. Dieses Verkleidungsteil ist mit der Radaufhängung des Fahrzeugs, genauer gesagt mit einem bei einem Radeinschlag bewegten Teil der Radaufhängung, mechanisch so gekoppelt, dass die abdeckende Fläche durch einen Radeinschlag verändert wird. Insbesondere ist das Unterboden-Verkleidungsteil mit dem Radträger mechanisch gekoppelt. Die abdeckende Fläche des Unterboden-Verkleidungsteils kann beispielsweise durch Kontakt mit einem beim Lenkeinschlag bewegten Teil der Radaufhängung verändert werden.

Die Baugruppe umfasst damit das Unterboden-Verkleidungsteil, die mechanische Koppelung und zumindest das entsprechende Teil der Radaufhängung.

Der Quersteg kann an einem Querlenker des Fahrzeugs befestigt sein.

Zur Übermittlung der Lenkbewegung können an einem Radträger des Fahrzeugs zwei dem Verkleidungsteil zugewandte Leitvorsprünge vorgesehen sein, die jeweils bei einer Lenkbewegung nach rechts bzw. links in Kontakt mit dem Unterboden-Verkleidungsteil, insbesondere mit der oder den flexiblen Streben, kommen.

Das Unterboden-Verkleidungsteil kann auch eine zumindest teilweise Abdichtung des Radkastenbereichs gegen das Eindringen bzw. Herausdrängen von Luftströmen bewirken.

Muss bei mit Kühlluft durchströmen Radkästen für eine gute Entlüftung des Radkastens gesorgt sein, kann das Unterboden-Verkleidungsteil optional an seinem zum Fahrzeugheck gerichteten Ende einen Luftkanal begrenzen, der im Wesentlichen horizontal ausgerichtet ist. Dieser Luftkanal ermöglicht ein Ausströmen von Luft aus dem Radkasten in einem im Wesentlichen horizontal gerichteten Luftstrom ohne Verwirbelungen, die den Luftwiderstand erhöhen würden.

Der optionale Luftkanal lässt sich durch einen Spalt zwischen dem Unterboden-Verkleidungsteil und einem angrenzenden Karosserieabschnitt bilden, durch den die Luft parallel entlang des Unterbodens des Fahrzeugs strömen kann.

Durch das Vorsehen eines derartigen Unterboden-Verkleidungsteils ist es möglich, eine normalerweise im Bereich der Vorderfront des Fahrzeugs vorgesehene Staulippe oder einen Staukörper zu verkleinern oder ganz einzusparen.

Die Gesamtgeometrie des Unterboden-Verkleidungsteils kann durch den Fachmann der Geometrie des Radkastenbereichs und dem erforderlichen Freigang des Unterboden-Verkleidungsteils in allen vorkommenden Betriebszuständen und Fahrzuständen angepasst werden.

Die Erfindung wird nachfolgend anhand eines Ausführungsbeispiels mit Bezug auf die beigefügten Zeichnungen im Detail beschrieben. In den Zeichnungen zeigen:
- Figur 1 eine schematische Ansicht eines Unterbodens eines Fahrzeugs mit einer erfindungsgemäßen Baugruppe mit einem erfindungsgemäßen Unterboden-Verkleidungsteil; und
- Figur 2 eine schematische Schnittansicht der Vorderfront eines Fahrzeugs, die die Luftströmungen im Bereich eines erfindungsgemäßen Unterboden-Verkleidungsteils verdeutlicht.

Die Darstellung in den Figuren ist nicht maßstabsgerecht.

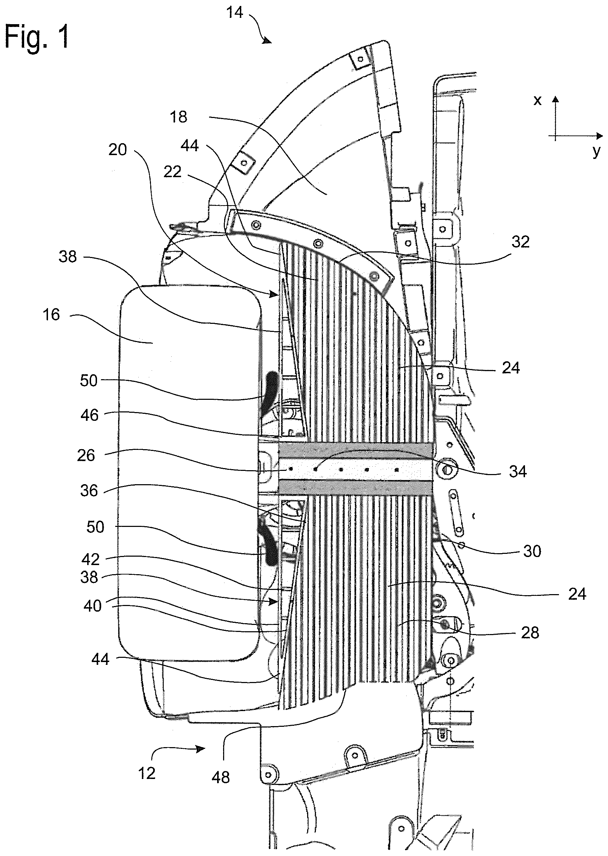

Figur 1 zeigt einen Unterboden eines Kraftfahrzeugs 12 im Bereich dessen Frontendes 14, der Vorderräder 16 und eines zugehörigen Radkastens 18 von unten. Jedes Rad 16 ist an einem Radträger befestigt. Ein Unterboden-Verkleidungsteil 20 erstreckt sich hier in etwa horizontal durch den Radkasten 18 und deckt unter anderem ein Lenkgestänge und eine Radaufhängung zur Fahrbahn hin ab.

Das Unterboden-Verkleidungsteil 20 weist einen Grundkörper 22 auf, der zwei in im Wesentlichen parallele Falten gelegte Abschnitte 24 hat, die durch einen Quersteg 26 aus einem geeigneten elastischen Material verbunden sind. Die Falten verlaufen in etwa in Fahrzeuglängsrichtung x.

Der Quersteg 26 ist hier auf Höhe der Radachse über einem symbolisch dargestellten Querlenker des Fahrzeugs 12 positioniert und teilt den Grundkörper 22 in einen vorderen und einen hinteren Abschnitt, die in etwa gleich groß sind.

Der Quersteg 26 verläuft vorzugsweise in Fahrzeugquerrichtung y und liegt in Längsrichtung, von unten gesehen, in Radmitte.

Die Abschnitte 24 bestehen beide aus einem biegsamen, witterungsbeständigen und gegenüber Umwelteinflüssen resistenten Material, beispielsweise einem geeigneten Kunststoff oder einem geeigneten beschichteten Gewebe. Im Bereich der Faltkanten sind Verstärkungsstrukturen 28, beispielsweise flexible, aber im Wesentlichen eigensteife Stäbe oder Rippen angeordnet, sodass die Abschnitte 24 im Wesentlichen selbsttragend ausgebildet sind.

Aufgrund der in Falten liegenden Abschnitte 24 kann der Grundkörper 22 seine abdeckende Fläche verändern, indem die Falten auseinandergezogen oder zusammengeschoben werden. Dies kann abschnittsweise geschehen, beispielsweise einzeln in den beiden in Falten liegenden Abschnitten 24 oder auch nur in einzelnen Bereichen der jeweiligen Abschnitte 24.

Entlang einer ersten Längsseite 30, die zur Innenseite des Radkastens 18 gerichtet ist, ist das Unterboden-Verkleidungsteil 20 hier fest und flächig mit der Innenseite des Radkastens 18 verschraubt, um es zu fixieren. An seinem vorderen Rand 32, an dem die Falten quer zur Fahrzeuglängsrichtung x beweglich sein müssen, kann das Unterboden-Verkleidungsteil 20 in einer nicht näher dargestellten Führung in y-Richtung verschiebbar aufgenommen sein, um eine Bewegung des vorderen Rands 32 in der Richtung senkrecht zur Zeichenebene zu unterbinden.

Das Unterboden-Verkleidungsteil 20 ist hier über den Quersteg 26 fest und im Wesentlichen unverschiebbar mit dem darunterliegenden Querlenker des Fahrzeugs 12 verbunden, beispielsweise durch Befestigungsstrukturen 34 in Form von Schraubverbindungen. Die Elastizität des Querstegs 26 sowie der Abschnitte 24 erlaubt jedoch eine Bewegung in allen drei Raumrichtungen, sodass sich das Unterboden-Verkleidungsteil 20 den Fahrzeug- und Radbewegungen anpassen kann.

Längs der der Längsseite 30 gegenüberliegenden, nicht fixierten Längsseite 36 sind zwei flexible Streben 38 fest mit den Abschnitten 24 verbunden.

Jede der flexiblen Streben 38 ist nach dem Flossenstrahleffekt aufgebaut. Zwei langgestreckte Längsstege 40, die an einem Ende aufeinander zulaufend ausgerichtet sind, sind durch mehrere, parallel zueinander angeordnete Querstege 42 verbunden, die sukzessive zum zulaufenden Ende hin kürzer werden. Infolgedessen läuft die elastische Strebe 38 an einem Ende 44 spitz zu, während sie an ihrem anderen Ende 46 eine vorbestimmte Breite aufweist, um die die beiden Längsstege 40 voneinander beabstandet sind.

Sowohl die Längsstege 40 als auch die Querstege 42 sind in einem gewissen Maß elastisch ausgebildet, was dazu führt, dass bei einer Krafteinwirkung im Bereich des breiten Endes 46 sich das spitz zulaufende Ende 44 in Richtung der Krafteinwirkung und nicht von dieser weg krümmt.

Die beiden elastischen Streben 38 sind so angeordnet, dass ihre spitz zulaufenden Enden 44 zum vorderen Rand 32 und zum hinteren Rand 48 des Unterboden-Verkleidungsteils 20 zeigen, wobei sich die flexiblen Streben 38 im Wesentlichen zusammen über die gesamte Länge des Grundkörpers 24 in Fahrzeuglängsrichtung x erstrecken.

Die beiden breiten Enden 46 grenzen an den Quersteg 26 an.

Am Radträger sind zwei Leitvorsprünge 50 angeordnet, die vom Radträger beidseitig von der Radachse in Richtung zum Unterboden-Verkleidungsteil 20 abstehen. Die beiden Leitvorsprünge 50 sind in etwa schaufelförmig gestaltet und in der in Figur 1 dargestellten Geradeausstellung in Anlage mit jeweils einer der elastischen Streben 38 im Bereich von deren breiten Ende 46. Erfolgt eine Lenkbewegung und ein Einschlag des Rades 16, so übt jeweils einer der Leitvorsprünge 50 eine Kraft auf eine der flexiblen Streben 38 aus, was dazu führt, dass sich das jeweilige zulaufende Ende 44 und somit die in Figur 1 obere bzw. untere linke Ecke des Unterboden-Verkleidungsteils 20 um das Rad 16 herum krümmt. Das Ende 44 der flexiblen Strebe 38 zieht dabei die Falten des jeweiligen Abschnitts 24 auseinander.

Natürlich könnte die Bewegung des Verkleidungsteils 20 auch von einer Bewegung eines anderen, beim Lenkeinschlag bewegten Teils der Radaufhängung abgeleitet werden.

Auf diese Weise wird eine optimale Abdeckung des Unterbodens 10 im Bereich des Radkastens 18 erreicht. Durch eine entsprechende Anpassung der Form, Steifigkeit, Länge und Ausdehnung der flexiblen Streben 38, des Querstegs 26 und der in Falten gelegten Abschnitte 24 kann das Unterboden-Verkleidungsteil 20 auf einfache Weise an unterschiedliche Fahrzeuggeometrien angepasst werden, um immer eine optimale Abdeckung des Unterbodens im Bereich des Radkastens 18 zu erzielen.

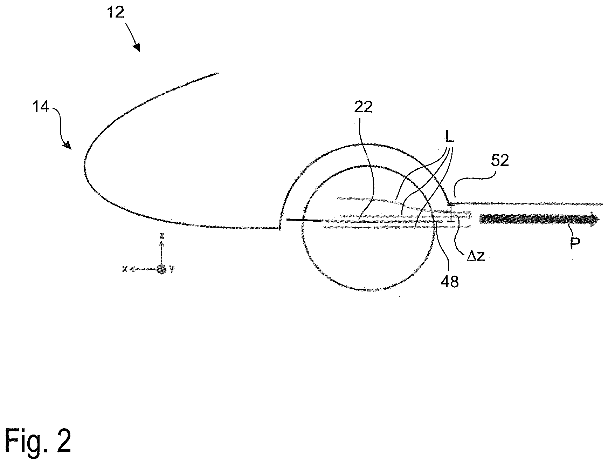

Die Luftströmung, die sich entlang und unterhalb des Unterboden-Verkleidungsteils 20 ausbildet, ist in Figur 2 mittels dem Pfeil L verdeutlich. Es ist zu erkennen, dass die Luft im Wesentlichen ohne Verwirbelungen parallel zum horizontalen Verlauf des Grundkörpers 22 des Unterboden-Verkleidungsteils 20 entlang strömt. Die Pfeile K zeigen die Kühlluftströmung aus dem Inneren des Radkastens 20.

Zwischen dem hinteren Rand 48 des Unterboden-Verkleidungsteils 20 und einem Abschnitt 52 der angrenzenden Karosserie bzw. Fahrzeugverkleidung, die sich in Längsrichtung an den Radkasten 18 anschließt, ist in dem hier gezeigten Beispiel ein Luftkanal 54 mit der vertikalen Höhe Δz ausgebildet, sodass zwischen dem Unterboden-Verkleidungsteil 20 und dem Abschnitt 52 der Fahrzeugkarosserie der Luftkanal 54 ausgebildet ist, der die aus dem Radkasten 18 ausströmende Luft parallel zum Unterboden des Fahrzeugs 12 abströmen lässt (siehe Pfeil P in Figur 2). Auf diese Weise werden Verwirbelungen und somit ein erhöhter Luftwiderstand vermieden.

## Patentansprüche

1. Unterboden-Verkleidungsteil einer Radachse im Bereich des Radkastens (18) eines Kraftfahrzeugs (12), mit einem Grundkörper (22), der am Fahrzeug (12) befestigt ist,
**dadurch gekennzeichnet, dass** die abdeckende Fläche des Grundkörpers (22) veränderbar ist und dass der Grundkörper (22) eine Befestigungsstruktur zur festen Verbindung mit der Karosserie und/oder eine Befestigungsstruktur (34) zur festen Verbindung mit einem Querlenker des Fahrzeugs (12) aufweist.

2. Unterboden-Verkleidungsteil nach Anspruch 1, **dadurch gekennzeichnet, dass** der Grundkörper (22) zur Veränderung der abdeckenden Fläche flexibel ausgebildet ist.

3. Unterboden-Verkleidungsteil nach einem der vorhergehenden Ansprüche, **dadurch gekennzeichnet, dass** der Grundkörper (22) wenigstens einen in im Wesentlichen parallele Falten gelegten Abschnitt (24) aufweist, der quer zu den Falten reversibel auseinanderziehbar ist.

4. Unterboden-Verkleidungsteil nach einem der vorhergehenden Ansprüche, **dadurch gekennzeichnet, dass** im Unterboden-Verkleidungsteil (20) wenigstens ein quer zur Fahrzeuglängsachse (x) verlaufender Quersteg (26) aus einem elastischen Material vorgesehen ist.

5. Unterboden-Verkleidungsteil nach einem der vorhergehenden Ansprüche, **dadurch gekennzeichnet, dass** entlang einer Längsseite (36) des Grundkörpers (22) wenigstens eine flexible Strebe (38) vorgesehen ist, die im eingebauten Zustand einem Radträger des Kraftfahrzeugs (12) zugewandt ist.

6. Unterboden-Verkleidungsteil nach Anspruch 5, **dadurch gekennzeichnet, dass** die flexible Strebe (38) an einem Ende zusammenlaufende flexible Längsstege (40) und mehrere parallel angeordnete Querstege (42) aufweist, die sich quer zu den Längsstegen (40) zwischen diesen erstrecken.

7. Unterboden-Verkleidungsteil nach Anspruch 6, **dadurch gekennzeichnet, dass** entlang der Längsseite (36) des Grundkörpers (22) flexible Streben (38) mit zusammenlaufenden Enden (44) vorgesehen sind, wobei die Enden (44) voneinander weg gerichtet sind.

8. Baugruppe mit einem Unterboden-Verkleidungsteil (20) nach einem der vorhergehenden Ansprüche, welches mit der Radaufhängung des Fahrzeugs (12) so gekoppelt ist, dass die abdeckende Fläche durch einen Radeinschlag verändert wird.

9. Baugruppe mit einem Unterboden-Verkleidungsteil (20) nach einem der vorhergehenden Ansprüche, soweit rückbezogen auf Anspruch 4, **dadurch gekennzeichnet, dass** der Quersteg (26) an einem Querlenker des Fahrzeugs (12) befestigt ist.

10. Baugruppe nach einem der Ansprüche 8 und 9, **dadurch gekennzeichnet, dass** die abdeckende Fläche des Unterboden-Verkleidungsteils (20) durch Kontakt mit einem beim Lenkeinschlag bewegten Teil der Radaufhängung verändert wird.

11. Baugruppe nach einem der Ansprüche 8 bis 10, **dadurch gekennzeichnet, dass** an einem Radträger des Fahrzeugs (12) zwei dem Unterboden-Verkleidungsteil (20) zugewandte Leitvorsprünge (50) vorgesehen sind, die jeweils bei einer Lenkbewegung in Kontakt mit dem Unterboden-Verkleidungsteil (20), insbesondere mit der oder den flexiblen Streben (38), kommen.

12. Baugruppe nach einem der Ansprüche 8 bis 11, **dadurch gekennzeichnet, dass** das Unterboden-Verkleidungsteil (20) abschnittsweise entlang einer Längsseite (30) fest am Radkasten (18) fixiert ist.

13. Baugruppe nach einem der Ansprüche 8 bis 12, **dadurch gekennzeichnet, dass** das Unterboden-Verkleidungsteil (20) an seinem zum Fahrzeugheck gerichteten hinteren Rand (48) einen Luftkanal begrenzt, der im Wesentlichen horizontal ausgerichtet ist.

14. Baugruppe nach Anspruch 13, **dadurch gekennzeichnet, dass** der Luftkanal (54) durch einen Spalt (Δz) zwischen dem Unterboden-Verkleidungsteil (20) und einem angrenzenden Karosserieabschnitt (52) gebildet ist.

## Claims

1. An underbody panelling part of a wheel axle in the region of the wheel arch (18) of a motor vehicle (12), with a main body (22), which is fastened to the vehicle (12),
**characterised in that** the covering surface of the main body (22) is variable, and **in that** the main body (22) has a fastening structure for fixed connection to the vehicle body and/or a fastening structure (34) for fixed connection to a transverse link of the vehicle (12).

2. An underbody panelling part according to claim 1, **characterised in that** the main body (22) is designed in a flexible manner for varying the covering surface.

3. An underbody panelling part according to either one of the preceding claims, **characterised in that** the main body (22) has at least one portion (24) laid in substantially parallel folds, which portion can be reversibly pulled apart transversely to the folds.

4. An underbody panelling part according to any one of the preceding claims, **characterised in that** at least one transverse web (26) made of a resilient material and running transversely to the vehicle longitudinal axis (x) is provided in the underbody panelling part (20).

5. An underbody panelling part according to any one of the preceding claims, **characterised in that** at least one flexible strut (38) is provided along a longitudinal side (36) of the main body (22) and faces towards a wheel carrier of the motor vehicle (12) in the installed state.

6. An underbody panelling part according to claim 5, **characterised in that** the flexible strut (38) has flexible longitudinal webs (40) which converge at one end and a plurality of transverse webs (42) which are arranged in parallel and which extend between the longitudinal webs (40) transversely thereto.

7. An underbody panelling part according to claim 6, **characterised in that** flexible struts (38) with converging ends (44) are provided along the longitudinal side (36) of the main body (22), wherein the ends (44) are directed away from one another.

8. A subassembly with an underbody panelling part (20) according to one of the preceding claims, which is coupled to the wheel suspension of the vehicle (12) such that the covering surface is varied by a wheel steering angle.

9. A subassembly with an underbody panelling part (20) according to any one of the preceding claims, insofar as dependent on claim 4, **characterised in that** the transverse web (26) is fastened to a transverse link of the vehicle (12).

10. A subassembly according to either one of claims 8 or 9, **characterised in that** the covering surface of the underbody panelling part (20) is varied by contact with a part of the wheel suspension moved as the result of a steering angle.

11. A subassembly according to one of claims 8 to 10, **characterised in that** two guide projections (50) facing towards the underbody panelling part (20) are provided on a wheel carrier of the vehicle (12) and each come into contact with the underbody panelling part (20), more especially with the one or more flexible struts (38), as the result of a steering movement.

12. A subassembly according to any one of claims 8 to 11, **characterised in that** the underbody panelling part (20) is firmly fixed in portions along a longitudinal side (30) to the wheel arch (18).

13. A subassembly according to any one of claims 8 to 12, **characterised in that** the underbody panelling part (20), on its rear wheel (48) directed to the rear end of the vehicle, delimits an air channel which is oriented substantially horizontally.

14. A subassembly according to claim 13, **characterised in that** the air channel (54) is formed by a gap (Δz) between the underbody panelling part (20) and an adjacent vehicle body portion (52).

## Revendications

1. Pièce d'habillage de bas de caisse d'un essieu de roue dans la région du caisson de roue (18) d'un véhicule automobile (12) comportant un corps de base (22) fixé au véhicule (12),
**caractérisée en ce que**
la surface couverte du corps de base (22) est variable et le corps de base (22) a une structure de fixation pour être relié de manière fixe à la carrosserie et/ou une structure de fixation (34) pour être reliée de manière fixe à un bras transversal du véhicule (12).

2. Elément d'habillage de bas de caisse selon la revendication 1,
**caractérisé en ce que**
le corps de base (22) est flexible pour modifier la surface couverte.

3. Elément d'habillage de bas de caisse selon l'une des revendications précédentes,
**caractérisé en ce que**
le corps de base (22) a au moins un segment (24) avec des plis parallèles, et qui peut s'étendre de manière réversible transversalement aux plis.

4. Elément d'habillage de bas de caisse selon l'une des revendications précédentes,
**caractérisé en ce que**
la pièce d'habillage de bas de caisse (20) comporte au moins une entretoise transversale (26) orientée transversalement à l'axe longitudinal (x) du véhicule et qui est en une matière élastique.

5. Elément d'habillage de bas de caisse selon l'une des revendications précédentes,
**caractérisé par**
au moins une entretoise flexible (38) prévue le long du côté longitudinal (36) du corps de base (22) et tournée vers le support de roue du véhicule (12) à l'état installé.

6. Elément d'habillage de bas de caisse selon la revendication 5,
**caractérisé en ce que**
l'entretoise flexible (38) comporte plusieurs entretoises transversales (42) parallèles qui se rejoignent à l'extrémité d'entretoises longitudinales (40) flexibles, les entretoises transversales étant orientées transversalement aux entretoises longitudinales (40) et entre celles-ci.

7. Elément d'habillage de bas de caisse selon la revendication 6,
**caractérisé en ce que**
des entretoises flexibles (38) avec des extrémités (44) qui se rejoignent sont prévues le long du grand côté (36) du corps de base (22), et les extrémités (44) sont orientées dans des directions opposées.

8. Module comportant un élément d'habillage de bas de caisse (20) selon l'une des revendications précédentes,
couplé à la suspension de roue du véhicule (12) pour que la surface ouverte puisse être modifiée par le braquage de roue.

9. Module comportant un élément d'habillage de bas de caisse (20) selon l'une des revendications précédentes,
et rapporté à la revendication 4,
**caractérisé en ce que**
l'entretoise transversale (26) est fixée à un bras transversal du véhicule (12).

10. Module selon l'une des revendications 8 et 9,
**caractérisé en ce que**
la surface ouverte de la pièce d'habillage de bas de caisse (20) se modifie au contact avec une partie de la suspension de roue qui se déplace au braquage.

11. Module selon l'une des revendications 8 à 10,
**caractérisé en ce qu'**
un support de roue du véhicule (12) comporte deux saillies directrices (50) tournées vers l'élément d'habillage de bas de caisse (20), ces saillies de guidage pour un mouvement de braquage, venant en contact avec la pièce d'habillage de bas de caisse (20), notamment avec la ou les entretoises flexibles (38).

12. Module selon l'une des revendications 8 à 11,
**caractérisé en ce que**
la pièce d'habillage de bas de caisse (20) est fixée par segments le long d'un grand côté (30), solidairement au caisson de roue (18).

13. Module selon l'une des revendications 8 à 12,
**caractérisé en ce que**
la pièce d'habillage de bas de caisse (20) délimite par son bord arrière (48) orienté latéralement par rapport à l'arrière du véhicule, un canal d'air qui est orienté pratiquement horizontalement.

14. Module selon la revendication 13,
**caractérisé en ce que**
le canal d'air (54) est formé par un intervalle (Δz) entre la pièce d'habillage de bas de caisse (20) et un segment de carrosserie adjacent (52).
